# EUROPÄISCHE PATENTSCHRIFT

(11) **EP 1 986 967 B1**
(45) Veröffentlichungstag und Bekanntmachung des Hinweises auf die Patenterteilung: **17.04.2013**
(21) Anmeldenummer: 07711172.2
(22) Anmeldetag: 12.02.2007
(51) Int. Cl.: C03B 11/08, C03B 19/02

(54) **VERFAHREN ZUR HERSTELLUNG TECHNISCHER GLASTEILE FÜR OPTISCHE ANWENDUNGEN**
METHOD FOR PRODUCING TECHNICAL GLASS PARTS FOR OPTICAL APPLICATIONS
PROCÉDÉ DE FABRICATION D'ÉLÉMENTS EN VERRE TECHNIQUES POUR DES APPLICATIONS OPTIQUES

(30) Priorität: 23.02.2006 DE 102006008938; 30.03.2006 DE 202006005261 U
(43) Veröffentlichungstag der Anmeldung: 05.11.2008
(73) Patentinhaber: DOCTER OPTICS GMBH, 07806 Neustadt an der Orla (DE)
(72) Erfinder: MÜHLE, Peter, 07747 Jena (DE); WINTZER, Wolfram, 07749 Jena (DE)
(74) Vertreter: Kiriczi, Sven Bernhard
(86) Internationale Anmeldenummer: PCT/DE2007/000251
(87) Internationale Veröffentlichungsnummer: WO 2007/095895

(56) Entgegenhaltungen:
- JP-A- 1 249 630
- JP-A- 5 170 454
- JP-A- 6 340 430
- JP-A- 9 268 021
- JP-A- 10 081 526
- JP-A- 2001 019 446

## Beschreibung

Die Erfindung betrifft ein Verfahren zur Herstellung eines technischen Glasteils, insbesondere mit hohen Anforderungen an Konturtreue und/oder Oberflächengüte. Ein derartiges technisches Glasteil kann eine optische Linse, insbesondere eine Präzisionslinse, eine optische Freiform oder ein technischer Glasartikel mit hohen Anforderungen an Konturtreue und Oberflächengüte sein. Unter einem technischen Glasteil soll ein technisches Glasteil für optische Anwendungen verstanden werden.

Vorrichtungen und Verfahren zur Herstellung von Präzisionslinsen sind z.B. aus der US 2006/0107697 A1, der EP 0 356 068 B1, der EP 1 273 424 A1, der DE 198 26 385 A1 sowie aus den Patent Abstracts of Japan, zu der JP 63182223 A, zu der JP 62292636 A, zu der JP 62292630 A, zu der JP 62292629 A, zu der JP 61266320 A, zur der JP 61242921 A, zu der JP 61242920 A, zu der JP 57041155 A, zu der JP 58177257 A, zu der JP 11333686 A, zu der JP 09277327 A, zu der JP 60033221 A und zu der JP 01298034 A bekannt.

Die DE 103 23 989 B4 offenbart eine Vorrichtung zur Durchführung eines Verfahrens zum Herstellen blankgepresster Glaskörper für optische Ausrüstungen, bei der ein flüssiger Glasposten einer Levitations-Vorform zugeführt wird, in welche der Glasposten, ohne die Vorform zu berühren, zu einem Vorformling vorgeformt wird, der nach Ablauf einer definierten Zeit an eine separate Pressform übergeben wird und darin mittels eines Presswerkzeuges in die Endform verpresst wird, wobei die Übergabe des Vorformlings an die Pressform so erfolgt, dass der Vorformling im freien Fall von der Vorform in die Pressform fällt, wobei die Vorform zur Übergabe des Glaspostens über die Pressform verfahren wird, in dieser Übergabeposition angehalten und nach unten vom Glasposten weggeschwenkt wird, mit zwei Drehschalttischen, von denen der eine kreisförmig angeordnete Vorformen zur Ausbildung der Vorformlinge aus einem flüssigen Glasposten aufweist, welche im unteren Bereich kleinste Öffnungen zum Einbringen eines Luftpolsters aufweisen, der andere kreisförmig angeordnete Pressformen zum Verpressen der Vorformlinge nach Übergabe aus den Vorformen aufweist, und wobei jede Vorform am ersten Drehschalttisch mittels eines schaltbaren Halters befestigt ist, welcher die Vorform in einer ersten Schaltstellung waagerecht hält und in einer zweiten Schaltstellung den freien Fall der Vorformlinge ermöglichenden Position hält.

Die DE 101 40 626 B4 offenbart ein Verfahren zur Herstellung eines pressgeformten Glaskörpers, bei dem schmelzflüssige Glasmasse in eine Form gegossen, in der Form mittels eines Pressstempels gepresst und abgekühlt und anschließend als der pressgeformte Glaskörper aus der Form entnommen wird, wobei die schmelzflüssige Glasmasse in der Form mehreren Pressvorgängen unterworfen wird, wobei zwischen den Pressvorgängen eine Abkühlung stattfindet und wenigstens einmal zwischen den Pressvorgängen eine Aufheizung der Außenbereiche der Glasmasse vorgenommen wird, derart, dass die Abkühlung der Glasmasse im Außenbereich der Abkühlung im Kern angepasst wird.

Die DE 102 34 234 A1 offenbart ein Verfahren zum Blankpressen eines Glaskörpers für optische Anwendungen unter Verwendung einer eine Oberform und eine Unterform und eventuell einen Ring umfassenden Pressform zur Aufnahme des oberhalb der Verformungstemperatur erwärmten Glaskörpers, bei dem zwischen Oberform und Unterform eine elektrische Spannung angelegt und spätestens nach Angleichen der Temperatur des Glaskörpers an die Temperatur der Pressform ein Pressdruck auf den Glaskörper aufgebracht wird.

Die DE 103 48 947 A1 offenbart eine Presse zum Heißformen optischer Elemente aus Glas mit Mitteln zur Erwärmung eines eine Oberform, Unterform und einen Führungsring aufweisenden Formblocks, welcher das Glasmaterial aufnimmt, wobei als Erwärmungsmittel eine Induktivheizung vorgesehen ist und der Formblock während des Erwärmens auf einem thermisch isolierenden Körper angeordnet ist.

Die DE 196 33 164 C2 offenbart ein Verfahren und eine Vorrichtung zum mindestens einseitigen Blankpressen von optischen Bauteilen für Beteuchtungszwecke, wobei mindestens ein maschinell portioniertes Glasteil von einem Greifer an mindestens eine ringförmige, aus mindestens einem Ofen ausfahrbare Aufnahme übergeben und von der Aufnahme in den Ofen bewegt und In demselben auf der Aufnahme erwärmt wird, wobei das erwärmte Glastell von der Aufnahme aus dem Ofen bewegt und wieder an den Greifer übergeben wird, der das erwärmte Glasteil einer Presse zum zumindest einseitigen Blankpressen zuführt und wobei das blankgepresste Glastell dann aus der Presse entnommen, an eine Kühlstrecke abgegeben und von derselben abtransportiert wird.

Die DE 103 60 259 A1 offenbart ein Verfahren zum Blankpressen optischer Elemente aus Glas, bei dem ein in einem Formblock befindlicher Glasposten auf eine Temperatur T oberhalb seiner Transformationstemperatur T_{G} erwärmt wird, der Glasposten gepresst und auf eine Temperatur unterhalb T_{G} abgekühlt wird, wobei die Abkühlung zunächst in einem ersten, oberhalb T_{G} liegenden Temperaturintervall mit einer ersten Kühlrate erfolgt und anschließend in einem zweiten Temperaturintervall, welches T_{G} beinhaltet, mit einer zweiten Kühlrate erfolgt, und wobei zum Einstellen der ersten und zweiten Kühlrate eine aktive Kühlung vorgenommen wird.

Die DE 44 22 053 C2 offenbart ein Verfahren zur Herstellung von Glasformlingen, bei dem in einer Pressstation schmelzflüssiges Glas mittels eines die Innere Form des Glasformlings vorgebenden Pressstempels in eine seine äußere Gestalt vorgebende Pressform hineingepraßt wird, wobei der Pressstempel nach dem Pressvorgang nur solange in Kontakt mit dem Glasformling in der Pressform verweilt und dabei Wärme von der Oberfläche des Glasformlings abgeführt wird, bis der Glasformling sich in seinem oberflächennahen Bereich auf eine solche Temperatur abgekühlt hat, dass er eine zur Entnahme aus der Pressform ausreichende Formsteiflgkeit der Oberfläche aufweist und wobei der Glasformling anschließend der Pressform entnommen und an eine Kühlstation übergeben wird, bevor er durch partielle Aufheizung Verformungen aufweist und der Glasformling in der Kühlstation bis zu seinem vollständigen Erstarren abgekühlt wird.

Weitere Verfahren bzw. Vorrichtungen zur Herstellung optischer Bauteile sind z.B. in der JP 09132417 A, der JP 10251030 A, der EP 1 584 863 A2 und der EP 0 078 658 B2 offenbart.

Die JP 2001019446 offenbart ein Verfahren, bei dem geschmolzenes Glas von einem Auslass bereitgestellt wird und in eine Form gefüllt wird, um geformt und langsam abgekühlt zu werden, sodass ein Glasposten entsteht. Der Glasposten wird wieder erwärmt bis zu einer Viskosität von 10⁴ bis 10⁶ Poise und mit einer Form gepresst.

Es ist Aufgabe der Erfindung, die Kosten für der Herstellung von technischen Glasteilen mit hohen Anforderungen an Konturtreue und Oberflächengüte, insbesondere von Präzisionslinsen, gegenüber bekannten Verfahren zu senken.

Vorgenannte Aufgabe wird durch ein Verfahren zur Herstellung eines technischen Glasteils, gemäß Anspruch 1 gelöst.

Geeignete Glassorten sind z.B. B270, F2, DOCTAN^{®} und Borosilikatglas. Eine Präzisionslinse im Sinne der Erfindung ist insbesondere eine Linse, deren Kontur von einer gewünschten Sollkontur um nicht mehr als 2 µm, insbesondere um nicht mehr als 1 µm, abweicht und/oder deren Oberflächenrauhigkeit nicht mehr als 5 nm beträgt. Oberflächenrauhigkeit im Sinne der Erfindung soll insbesondere als Ra, insbesondere nach ISO 4287, definiert sein. Unter Blankpressen soll im Sinne der Erfindung insbesondere ein derartiges Pressen eines Glasteils bzw. einer Präzisionslinse verstanden werden, dass eine Nachbearbeitung einer optisch wirksamen Oberfläche des Glasteils bzw. der Präzisionslinse, insbesondere eine Nachbearbeitung zum Erreichen dessen bzw. deren gewünschter Kontur, nach dem Pressen entfallen kann.

Beispiele für Injektionspressen für Glasteile sind z.B. auf der Internetseite www.putsch.com/Pu_Ge_Se/deutscheVersion/Ebene5/FraSets/FSGIas/FSSIM.html offenbart. Injektionspressen für Glasteile können z.B. von der Putsch Gmbh Co. KG, Frankfurter Straße 5 - 21, 58095 Hagen, Deutschland bezogen werden.

In weiterhin vorteilhafter Ausgestaltung der Erfindung wird der Rohling mittels eines Injektionspressverfahrens mit einem angeformten Anguss hergestellt, wobei das Volumen des Angusses vorteilhafterweise größer ist als das Volumen des Rohlings. In weiterhin vorteilhafter Ausgestaltung der Erfindung beträgt das Volumen des Angusses mehr als das Doppelte des Volumens des Rohlings. In weiterhin vorteilhafter Ausgestaltung der Erfindung umfasst der Anguss eine Verdickung. In weiterhin vorteilhafter Ausgestaltung der Erfindung wird der Rohling beim Kühlen und/oder beim Erwärmen am Anguss hängend gehalten.

In weiterhin vorteilhafter Ausgestaltung der Erfindung umfasst der Anguss einen Standfuß, wobei in weiterhin vorteilhafter Ausgestaltung der Erfindung vorgesehen ist, dass der Rohling beim Kühlen und/oder beim Erwärmen mittels des Standfußes aufgestellt wird.

In weiterhin vorteilhafter Ausgestaltung der Erfindung ist der Anguss zumindest zweiteilig ausgestaltet. Ein Anguss ist in diesem Sinne zumindest zweiteilig ausgestaltet, wenn er zumindest zwei nicht unmittelbar miteinander sondern mittels des Rohlings verbundene Teile umfasst.

In weiterhin vorteilhafter Ausgestaltung der Erfindung umfasst der Anguss zumindest einen zylindrisch geformten Teil. In weiterhin vorteilhafter Ausgestaltung der Erfindung beträgt ein dem Rohling zugeordneter Kugeldurchmesser, ein Kugeldurchmesser des Rohlings und/oder ein bzw. der Durchmesser des Rohlings zumindest das Doppelte des Durchmessers des zylindrisch geformten Teils. In weiterhin vorteilhafter Ausgestaltung der Erfindung beträgt die Länge des zylindrisch geformten Teils zumindest das Doppelte des Durchmessers des zylindrisch geformten Teils.

In weiterhin vorteilhafter Ausgestaltung der Erfindung wird der Rohling unter Zuführung von Wärme gekühlt. In weiterhin vorteilhafter Ausgestaltung der Erfindung wird der Rohling bei einer Temperatur zwischen 300°C und 500°C, insbesondere zwischen 350°C und 450°C, gekühlt. In weiterhin vorteilhafter Ausgestaltung der Erfindung wird der Rohling bei einer bei einer Temperatur zwischen 20 K und 200 K, insbesondere zwischen 70 K und 150 K, unterhalb der Transformationstemperatur T_{G} des Glases des Rohlings gekühlt.

In weiterhin vorteilhafter Ausgestaltung der Erfindung wird der Rohling derart gekühlt und anschließend erwärmt, dass sich dessen Temperaturgradient umdreht. In weiterhin vorteilhafter Ausgestaltung der Erfindung wird der Rohling derart erwärmt, dass seine Temperatur an der Oberfläche (insbesondere unmittelbar vor dem Pressen) zwischen 700°C und 900°C, insbesondere zwischen 750°C und 850°C, beträgt. In weiterhin vorteilhafter Ausgestaltung der Erfindung wird der Rohling derart erwärmt, dass seine Oberfläche (insbesondere unmittelbar vor dem Pressen) eine Temperatur annimmt, die der Temperatur entspricht, bei der das Glas des Rohlings eine Viskosität log zwischen 5 (entspricht 10⁵ Pas) und 8 (entspricht 10⁸ Pas), insbesondere eine Viskosität log zwischen 5,5 (entspricht 10^{5,5} Pas) und 7 {entspricht 10⁷ Pas), besitzt. Der Temperaturgradient wird vorteilhafterweise derart eingestellt, dass die Temperatur im Kern des Rohlings unterhalb oder nahe der Transformationstemperatur T_{G} des Glases liegt. Die Transformationstemperatur T_{G} des Glases ist der Temperatur, bei der das Glas hart wird. Die Transformationstemperatur T_{G} des Glases soll im Sinne der Erfindung insbesondere die Temperatur des Glases sein bei dem dieses eine Viskosität log in einem Bereich um 13,2 (entspricht 10^{13,2} Pas), insbesondere zwischen 13 (entspricht 10¹³ Pas) und 14,5 (entspricht 10^{14,5} Pas) besitzt.

In weiterhin vorteilhafter Ausgestaltung der Erfindung wird der Rohling beim Kühlen und/oder beim Erwärmen nicht berührt. In weiterhin vorteilhafter Ausgestaltung der Erfindung wird der Rohling beim Kühlen und/oder beim Erwärmen nicht an einer als optische Wirkfläche vorgesehenen Oberfläche berührt. In weiterhin vorteilhafter Ausgestaltung der Erfindung wird der Rohling außer beim Pressen nicht an einer als optische Wirkfläche vorgesehenen Oberfläche berührt. In weiterhin vorteilhafter Ausgestaltung der Erfindung wird der Rohling vor dem Pressen nicht an einer aus optische Wirkfläche vorgesehenen Oberfläche berührt. In weiterhin vorteilhafter Ausgestaltung der Erfindung wird der Rohling zwischen dem Injektionspressen und dem Pressen nicht an einer als optische Wirkfläche vorgesehenen Oberfläche berührt.

In weiterhin vorteilhafter Ausgestaltung der Erfindung wird der Rohling mittels einer Horizontalpresse zu dem technischen Glasteil, insbesondere mit hohen Anforderungen an Konturtreue und/oder Oberflächengüte, insbesondere der Präzisionslinse, blank gepresst. In weiterhin vorteilhafter Ausgestaltung der Erfindung wird der Anguss nach dem Pressen des technischen Glasteils, insbesondere mit hohen Anforderungen an Konturtreue und/oder Oberflächengüte, insbesondere der Präzisionslinse, entfernt.

In weiterhin vorteilhafter Ausgestaltung der Erfindung wird das technische Glasteil, insbesondere mit hohen Anforderungen an Konturtreue und/oder Oberflächengüte, insbesondere die Präzisionslinse, nach dem Pressen unter Zugabe von Wärme abgekühlt, wobei vorteilhafterweise vorgesehen ist, dass der Anguss nach dem Abkühlen des technischen Glasteils, insbesondere mit hohen Anforderungen an Konturtreue und/oder Oberflächengüte, insbesondere der Präzisionslinse, entfernt wird. Dabei wird das technische Glasteil, insbesondere mit hohen Anforderungen an Konturtreue und/oder Oberflächengüte, insbesondere die Präzisionslinse, in weiterhin vorteilhafter Ausgestaltung der Erfindung beim Abkühlen hängend gehalten oder mittels des Standfußes aufgestellt.

In weiterhin vorteilhafter Ausgestaltung der Erfindung beträgt das Volumen des Rohlings zwischen 110% und 130% des Volumens des technischen Glasteils, insbesondere mit hohen Anforderungen an Konturtreue und/oder Oberflächengüte, insbesondere der Präzisionslinse.

Ausserdem wird ein Verfahren zur Herstellung eines technischen Glasteils, insbesondere mit hohen Anforderunge an Konturtreue und/oder Oberflächengüte, insbesondere einer Präzisionslinse_{,} vorgestellt wobei ein Rohling hergestellt wird, wobei der Rohling derart gekühlt und anschließend erwärmt wird, dass sich dessen Temperaturgradient umdreht, und wobei der Rohling anschließend zu einem technischen Glasteil, insbesondere mit hohen Anforderungen an Konturtreue und/oder Oberflächengüte, insbesondere einer Präzisionslinse, insbesondere beidseitig, blank gepresst wird.

Geeignete Glassorten sind z.B. B270, F2, DOCTAN^{®} und Borosilikatglas. In weiterhin vorteilhafter Ausgestaltung wird der Rohling unter Zuführung von Wärme gekühlt. In weiterhin vorteilhafter Ausgestaltung wird der Rohling bei einer Temperatur zwischen 300°C und 500°C, insbesondere zwischen 350°C und 450°C, gekühlt. In weiterhin vorteilhafter Ausgestaltung wird der Rohling bei einer bei einer Temperatur zwischen 20 K und 200 K, insbesondere zwischen 70 K und 150 K, unterhalb der Transformationstemperatur T_{G} des Glases des Rohlings gekühlt. In weiterhin vorteilhafter Ausgestaltung wird der Rohling derart erwärmt, dass seine Temperatur an der Oberfläche zwischen 700°C und 900°C, insbesondere zwischen 750°C und 850°C, beträgt. In weiterhin vorteilhafter Ausgestaltung wird der Rohling derart erwärmt, dass seine Oberfläche eine Temperatur annimmt, die der Temperatur entspricht, bei der das Glas des Rohlings eine Viskosität log zwischen 5 (entspricht 10⁵ Pas) und 8 (entspricht 10⁸ Pas), insbesondere eine Viskosität log zwischen 5,5 (entspricht 10^{5,5} Pas) und 7 (entspricht 10⁷ Pas), besitzt.

In weiterhin vorteilhafter Ausgestaltung wird der Rohling beim Kühlen und/oder beim Erwärmen nicht berührt. In weiterhin vorteilhafter Ausgestaltung wird der Rohling beim Kühlen und/oder beim Erwärmen nicht an einer als optische Wirkfläche vorgesehenen Oberfläche berührt. In weiterhin vorteilhafter Ausgestaltung wird der Rohling außer beim Pressen nicht an einer als optische Wirkfläche vorgesehenen Oberfläche berührt. In weiterhin vorteilhafter Ausgestaltung wird der Rohling vor dem Pressen nicht an einer als optische Wirkfläche vorgesehenen Oberfläche berührt. In weiterhin vorteilhafter Ausgestaltung wird der Rohling zwischen dem injektoonspressen und dem Pressen nicht an einer als optische Wirkfläche vorgesehenen Oberfläche berührt.

In weiterhin vorteilhafter Ausgestaltung wird der Rohling mittels einer Horizontalpresse zu dem technischen Glasteil, insbesondere mit hohen Anforderungen an Konturtreue und/oder Oberflächengüte, insbesondere der Präzisionslinse, blank gepresst.

Eine Vorrichtung zur Herstellung eines technischen Glasteils, insbesondere mit hohen Anforderungen an Konturtreue und/oder Oberflächengüte, insbesondere einer Präzisionslinse, insbesondere zur Durchführung eines Verfahrens mit einem oder mehreren der vorgenannten Merkmale, wird vorgestellt, wobei die Vorrichtung ein Schmelzaggregat, eine Injektionspresse zum Pressen eines Rohling, eine Temperiereinrichtung zum Kühlen und anschließendem Erwärmen des Rohlings und eine Presse zum Pressen eines technischen Glasteils, insbesondere mit hohen Anforderungen an Konturtreue und/oder Oberflächengüte, insbesondere einer Präzisionslinse, aus dem Rohling umfasst.

In vorteilhafter Ausgestaltung umfasst die Injektionspresse eine Pressform zum Pressen des Rohlings mit einem angeformten Anguss. In weiterhin vorteilhafter Ausgestaltung ist die Presse als Horizontalpresse ausgestaltet.

Ein Kühlen unter Zugabe von Wärme soll insbesondere bedeuten, dass bei einer Temperatur von mehr als 100°C gekühlt wird.

Es ist insbesondere vorgesehen, dass der Rohling vor dem Umkehren des Temperaturgradienten der Injektionsprerse bzw. einer entsprechenden Injektionspressform oder Form entnommen wird. Es Ist insbesondere vorgesehen, dass das Umkehren des Temperaturgradienten außerhalb einer Injektionspressform oder Form erfolgt.

Vorteile und Einzelheiten ergeben sich aus der nachfolgenden Beschreibung von Ausführungsbeispielen. Dabei zeigen:
- Fig. 1: eine in einer Prinzipdarstellung dargestellte Vorrichtung zur Herstellung von technischen Glasteilen mit hohen Anforderungen an Konturtreue und Oberflächengüte, insbesondere von Präzisionslinsen,
- Fig. 2: einen beispielhaften Ablauf eines Verfahrens zur Herstellung von technischen Glasteilen mit hohen Anforderungen an Konturtreue und Oberflächengüte, insbesondere von Präzisionslinsen,
- Fig. 3: eine perspektivische Darstellung eines Ausführungsbeispiels eines Rohlings mit einem angeformten Anguss, und
- Fig. 4: eine Seitenansicht des Rohlinge mit angeformtem Anguss gemäß Fig. 3.

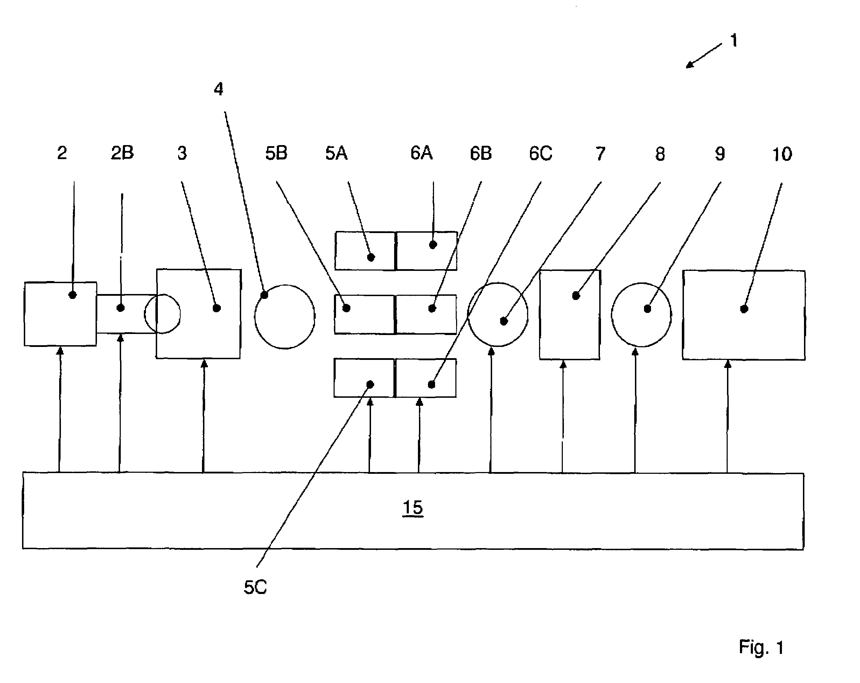

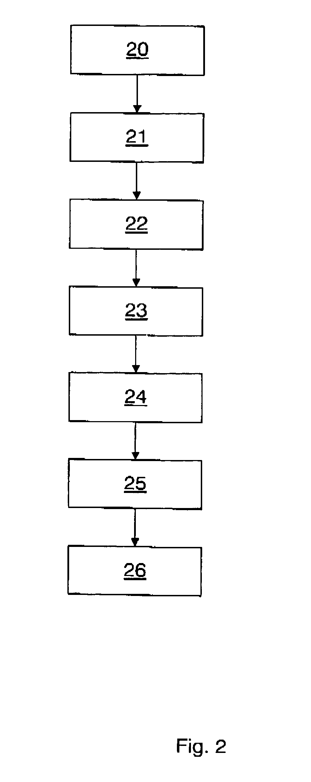

Fig. 1 zeigt eine - in einer Prinzipdarstellung dargestellte - Vorrichtung 1 zur Durchführung eines In Fig. 2 dargestellten Verfahrens zur Herstellung von technischen Glasteilen mit hohen Anforderungen an Konturtreue und Oberflächengüte, insbesondere von Präzisionslinsen. Die Vorrichtung 1 zur Herstellung von technischen Glastellen mit hohen Anforderungen an Konturtreue und Oberflächengüte umfasst ein Schmeizaggregat 2 mit einem (regelbaren) Auslauf 2B, eine Injektionspresse 3, eine hinter der Injektionspresse 3 angeordnete, als Roboter 4 ausgestaltete, Übergabestation sowie Temperiereinrichtungen 5A, 5B, 5C zum Kühlen von Rohlingen bzw. Injektionspresslingen und Temperiereinrichtungen 6A, 6B, 6C zum Erwärmen von Rohlingen bzw. Injektionspresslingen. Eine Kombination der Temperiereinrichtung 5A mit der Temperiereinrichtung 6A, eine Kombination der Temperiereinrichtung 5B mit der Temperiereinrichtung 6B bzw. eine Kombination der Tempanereinrichtung 5C mit der Temperiereinrichtung 6C ist insbesondere ein Beispiel für eine Temperiereinrichtung im Sinne der Ansprüche.

Die Vorrichtung 1 zur Herstellung von technischen Glasteilen mit hohen Anforderungen an Konturtreue und Oberflächengüte umfasst zudem eine hinter den Temperiereinrichtungen 6A, 6B, 6C angeordnete, als Roboter 7 ausgestaltete, Übergabestation, eine, insbesondere als Präzisionspresse und als Horizontalpresse ausgestaltete, Presse 8, eine hinter der Presse 8 angeordnete, als Roboter 9 ausgestaltete, Übergabestation sowie eine Kühlbahn 10. Zudem umfasst die Vorrichtung 1 zur Herstellung von technischen Glastellen mit hohen Anforderungen an Konturtreue und Oberflächengüte eine Steueranordnung 15 zu ihrer Steuerung und Regelung. Die Steueranordnung 15 sorgt dabei vorteilhafterweise für eine kontinuierliche Verknüpfung der in Fig. 2 dargestellten Prozessschritte.

Gemäß dem in Fig. 2 dargestellten Verfahren wird in einem Prozessschritt 20 in dem Schmelzaggregat 2 Glas, im vorliegenden Ausführungsbeispiel B270, erschmolzen und in einem dem Prozessschritt 20 folgenden Prozessschritt 21 über den Auslauf 2B, möglichst mit Plunger, portioniert abgelassen. Eine nicht dargestellte präzise Schere sorgt für einen fehlerfreien Schnitt. Der so entstandene Glasposten wird in die unter dem Auslauf befindliche Injektionspresse gegeben. Das Schmelzaggregat 2 kann sowohl kontinuierlich als auch diskontinuierlich betrieben werden. Es ist resistent gegen die zur Anwendung vorgesehenen Glasschmelzen. Als Rohmaterial kommen Gemenge, Restglas, angeläuterte Rauhschmelze oder Mischungen dieser Materalien in Frage.

Dem Prozessschritt 21 folgt ein Prozessschritt 22 mit einem Injektionspressverfahren, mittels dessen ein Injektionspressling mit einem für ein anschließendes Blankpressverfahren vorgesehenen Rohling (Spritzgußkörper) und einem Anguss hergestellt wird. Der flüssige Glasposten wird dabei in einer Injektionspressform platziert und mit hoher Geschwindigkeit, insbesondere unter Anlegen von Unterdruck, in die Form gepresst. Es sind sehr variable Formgeometrien und große Schlankheitsgrade realisierbar. Wichtig ist dabei die Gewährleistung einer hohen Oberflächenqualität der Injektionspressform, um eine hochqualitative Oberfläche des Rohlings zu erzeugen. Alternativ kann das Glas auch aus Öffnungen der Form gedrückt werden und als freie Oberfläche verbleiben. Der Rohling besitzt - abgesehen von dem Anguss - eine Form, die der späteren Form des zu pressenden technischen Glasteils mit hohen Anforderungen an Konturtreue und Oberflächengüte, insbesondere der zu pressenden Präzisionslinse, nahe kommt.

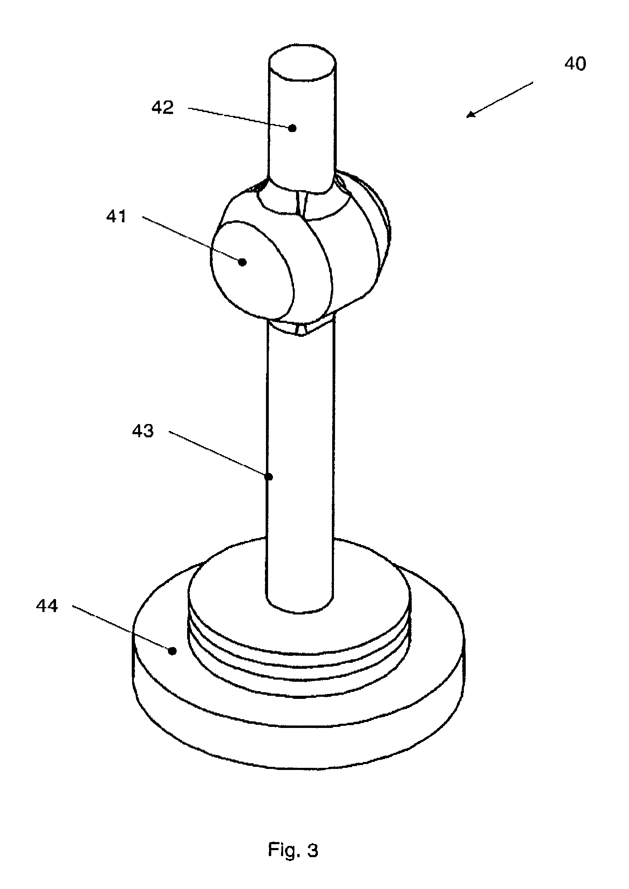

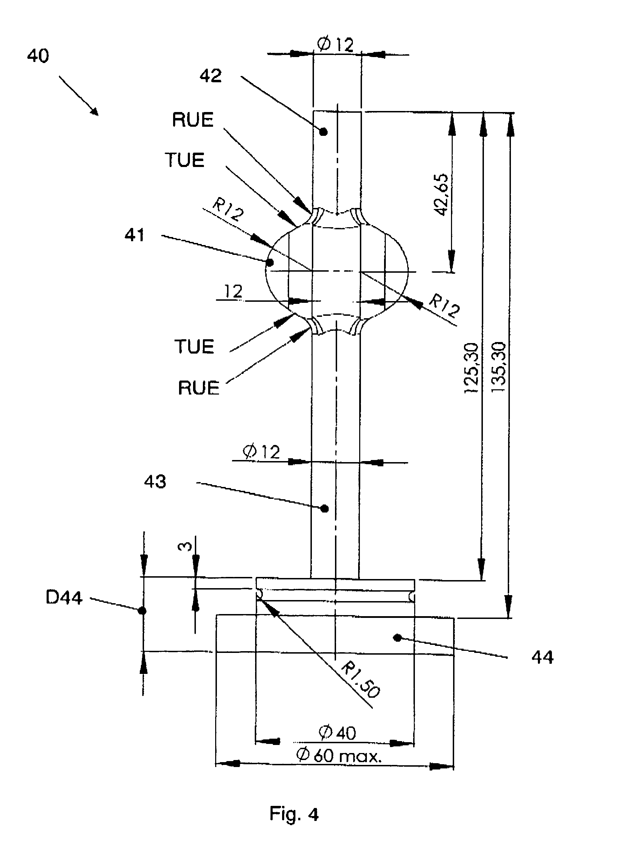

Fig. 3 zeigt eine perspektivische Darstellung eines Ausführungsbeispiels eines Injektionspresslings 40, und Fig. 4 zeigt eine Seitenansicht des Injektionspresslings 40. Der Injektionspressling 40 umfasst einen für ein anschließendes Blankpressverfahren vorgesehenen Rohling 41, ein zylindrisches Teil 42, ein zylindrisches Teil 43 und einen Standfuß 44. Die zylindrischen Teile 42 und 43 bilden zusammen mit dem Standfuß 44 einen Anguss. Bezugszeichen RUE in Fig. 4 bezeichnet einen runden Übergang. Bezugszeichen TUE bezeichnet einen tangentialen Übergang. Die mit Bezugszeichen bezeichnete Dicke D44 des Standfußes 44 ist variabel und hängt von der Glasmenge ab. Die Bemaßungen in Fig. 4 beziehen sich auf die Einheit Millimeter. Das Volumen des Rohlings beträgt vorteilhafterweise zwischen 110% und 130% des Volumens des späteren technischen Glasteils mit hohen Anforderungen an Konturtreue und/oder Oberflächengüte, insbesondere der Präzisionslinse

Dem Prozessschritt 22 folgt ein Prozessschritt 23, in dem der Rohling mittels einer der Temperiereinrichtungen 5A, 5B, 5C gekühlt wird. Zur Übergabe ist die, als Roboter 4 ausgestaltete, Übergabestation vorgesehen. Es ist vorteilhafterweise vorgesehen, dass der Rohling am Anguss in die Temperiereinrichtungen 5A, 5B bzw. 5C gehängt oder gestellt wird. Der Rohling wird mittels der Temperiereinrichtungen 5A, 5B, 5C vorteilhafterweise bei einer Temperatur zwischen 300°C und 500°C, insbesondere zwischen 350°C und 450°C, gekühlt. Im vorliegenden Ausführungsbeispiel wird der Injektionspressling und damit der Rohling 5 Minuten bei einer Temperatur von 400°C gekühlt. Zur Erhöhung der Variabilität können an dieser Stelle auch Rohlinge ausgekreist werden und separat auf Raumtemperatur gekühlt werden.

In einem anschließenden Prozessschritt 24 wird der Rohling mittels einer der Temperiereinrichtungen 6A, 6B, 6C auf die zum Verpressen notwendige Temperatur erwärmt. Dabei ist vorteilhafterweise vorgesehen, dass der Rohling am Anguss in die Temperiereinrichtungen 6A, 6B bzw. 6C gehängt oder gestellt wird. Vorteilhafterweise wird der Rohling derart erwärmt, dass seine Temperatur an der Oberfläche (insbesondere unmittelbar vor dem Pressen) zwischen 700°C und 900°C, insbesondere zwischen 750°C und 850°C, beträgt.

Die Temperiereinrichtungen 5A, 5B, 5C und 6A, 6B, 6C können z.B. durch einen Tunnelofen, insbesondere mit Kammern, ersetzt werden. Insbesondere in diesem Fall können die Prozessschritte 23 und 24 zusammengefasst werden.

Die Prozessschritte 23 und 24 werden derart aufeinander abgestimmt, dass eine Umkehrung des Temperaturgradienten erreicht wird. Während der Rohling vor dem Prozessschritt 23 (bei kontinuierlichem Temperaturverlauf) innen wärmer als außen ist, ist er nach dem Prozessschritt 24 (bei kontinuierlichem Temperaturverlauf) außen wärmer als innen. Der Temperaturgradient wird vorteilhafterweise derart eingestellt, dass die Temperatur im Kern des Rohlings unterhalb oder nahe T_{G} liegt. Die Steuerparameter hier sind Temperaturen in den Temperiereinrichtungen 5A, 5B, 5C und 6A, 6B, 6C und Verweilzeit des Rohlings in den Temperiereinrichtungen 5A, 5B, 5C und 6A, 6B, 6C. Vorteilhaft ist es, den - am Anguss gehaltenen - Rohling während der Prozessschritle 23 und 24 zu drehen.

Werden Rohlinge ausgekreist, so werden sie separat auf Raumtemperatur abgekühlt und danach auch unterbrochen wieder eingekreist und aufgeheizt.

Dem Prozessschritt 24 folgt ein Prozessschritt 25, in dem der Rohling mittels des Roboters 7 am Anguss in die Presse 8 eingebracht und zu einem technischen Glasteil mit hohen Anforderungen an Konturtreue und Oberflächengüte, insbesondere zu einer Präzisionslinse, insbesondere beidseitig, blank gepresst wird. In vorteilhafter Ausgestaltung ist die Presse 8 horizontal ausgerichtet (Horizontalpresse). Anschließend wird das technische Glasteil mit hohen Anforderungen an Konturtreue und Oberflächengüte, insbesondere die Präzisionslinse, in einem Prozessschritt 26 mittels des Roboters 9 entnommen und der Kühlbahn 10 zugeführt. Die Kühlung erfolgt dabei herkömmlich, wobei der Anguss in das Auflage- und Haltekonzept eingebunden ist und im Anschluss an das Kühlen entfernt wird.

Je nach Anforderung an die Produkte werden die Prozessschritte unter klimatisierten Reinraumbedingungen durchgeführt. Der Rohling wird - außer beim Pressen - nur am Anguss berührt, so dass die (späteren) optischen Wirkflächen nicht berührt werden.

In einer Ausgestaltung kann zwischen dem Prozessschritt 22 und dem Prozessschritt 25 ein zusätzlicher Prozessschritt vorgesehen sein, in dem eine Feuerpolltur zur Erhöhung der Oberflächenqualität durchgeführt wird. In diesem Fall umfasst die Vorrichtung 1 zur Herstellung von technischen Glasteilen mit hohen Anforderungen an Konturtreue und Oberflächengüte eine entsprechende Einrichtung zur Durchführung der Feuerpolitur.

Die Elemente in Fig. 1, ist unter Berücksichtigung von Einfachheit und Klarheit und nicht notwendigerweise maßstabsgetreu gezeichnet. So sind z.B. die Größenordnungen einiger Elemente übertrieben gegenüber anderen Elementen dargestellt, um das Venständnis der Ausführungsbeispiele der vorliegenden Erfindung zu verbessern.

## Patentansprüche

1. Verfahren zur Herstellung eines technischen Glasteils mit hohen Anforderungen an Konturtreue und Oberflächengüte, insbesondere einer Präzisionslinse, wobei ein Rohling (41) mittels eines Injektionspressverfahrens mit einem angeformten Anguss (42, 43, 44) hergestellt wird, wobei der Rohling (41) gekühlt und anschließend erwärmt wird und wobei der Rohling (41) anschließend zu einem technischen Glasteil mit hohen Anforderungen an Konturtreue und Oberflächengüte, insbesondere einer Präzisionslinse, blank gepresst wird, wobei der Rohling (41) beim Kühlen und/oder beim Erwärmen am Anguss (42, 43, 44) hängend gehalten oder mittels eines Standfußes (44) des Angusses (42, 43, 44) aufgestellt wird.

2. Verfahren nach Anspruch 1, **dadurch gekennzeichnet, dass** das Volumen des Angusses (42, 43, 44) größer ist als das Volumen des Rohlings (41).

3. Verfahren nach Anspruch 1 oder 2, **dadurch gekennzeichnet, dass** das Volumen des Angusses (42, 43, 44) mehr als das Doppelte des Volumens des Rohlings (41) beträgt.

4. Verfahren nach einem der Ansprüche 1 bis 3, **dadurch gekennzeichnet, dass** der Anguss (42, 43, 44) eine Verdickung (44) umfasst.

5. Verfahren nach einem der Ansprüche 1 bis 4, **dadurch gekennzeichnet, dass** der Anguss (42, 43, 44) zumindest zweiteilig ausgestaltet ist.

6. Verfahren nach einem der Ansprüche 1 bis 5, **dadurch gekennzeichnet, dass** der Anguss (42, 43, 44) zumindest einen zylindrisch geformten Teil (42, 43) umfasst.

7. Verfahren nach Anspruch 6, **dadurch gekennzeichnet, dass** die Länge des zylindrisch geformten Teils (42, 43) zumindest das Doppelte des Durchmessers des zylindrisch geformten Teils (42, 43) beträgt.

8. Verfahren nach einem der vorhergehenden Ansprüche, **dadurch gekennzeichnet, dass** der Rohling (41) unter Zuführung von Wärme gekühlt wird.

9. Verfahren nach einem der vorhergehenden Ansprüche, **dadurch gekennzeichnet, dass** der Rohling (41) bei einer Temperatur zwischen 20 K und 200 K unterhalb der Transformationstemperatur des Glases des Rohlings (41) gekühlt wird.

10. Verfahren nach einem der vorhergehenden Ansprüche, **dadurch gekennzeichnet, dass** der Rohlings (41) derart gekühlt und anschließend erwärmt wird, dass sich dessen Temperaturgradient umdreht.

11. Verfahren nach einem der vorhergehenden Ansprüche, **dadurch gekennzeichnet, dass** der Rohling (41) derart erwärmt wird, dass seine Oberfläche eine Temperatur annimmt, die der Temperatur entspricht, bei der das Glas des Rohlings (41) eine Viskosität log zwischen 10⁵ Pas und 10⁸ Pas besitzt.

12. Verfahren nach einem der vorhergehenden Ansprüche, **dadurch gekennzeichnet, dass** der Rohling (41) beim Kühlen und/oder beim Erwärmen nicht berührt wird.

13. Verfahren nach einem der vorhergehenden Ansprüche, **dadurch gekennzeichnet, dass** der Rohling (41) beim Kühlen und/oder beim Erwärmen nicht an einer als optische Wirkfläche vorgesehenen Oberfläche berührt wird.

14. Verfahren nach einem der vorhergehenden Ansprüche, **dadurch gekennzeichnet, dass** der Rohling (41) außer beim Pressen nicht an einer als optische Wirkfläche vorgesehenen Oberfläche berührt wird.

15. Verfahren nach einem der vorhergehenden Ansprüche, **dadurch gekennzeichnet, dass** der Rohling (41) mittels einer Horizontalpresse (8) zu dem technischen Glasteil mit hohen Anforderungen an Konturtreue und Oberflächengüte, insbesondere der Präzisionslinse, blank gepresst wird.

16. Verfahren nach einem der vorhergehenden Ansprüche, **dadurch gekennzeichnet, dass** der Anguss (42, 43, 44) nach dem Pressen des technischen Glasteils mit hohen Anforderungen an Konturtreue und Oberflächengüte, insbesondere der Präzisionslinse, entfernt wird.

17. Verfahren nach einem der vorhergehenden Ansprüche, **dadurch gekennzeichnet, dass** das technische Glasteil mit hohen Anforderungen an Konturtreue und Oberflächengüte, insbesondere die Präzisionslinse, nach dem Pressen unter Zugabe von Wärme abgekühlt wird.

18. Verfahren nach Anspruch 17, **dadurch gekennzeichnet, dass** der Anguss (42, 43, 44) nach dem Abkühlen des technischen Glasteils mit hohen Anforderungen an Konturtreue und Oberflächengüte, insbesondere der Präzisionslinse, entfernt wird.

19. Verfahren nach Anspruch 17 oder 18, **dadurch gekennzeichnet, dass** das technische Glasteil mit hohen Anforderungen an Konturtreue und Oberflächengüte, insbesondere die Präzisionslinse, beim Abkühlen hängend gehalten wird.

20. Verfahren nach Anspruch 17 oder 18, **dadurch gekennzeichnet, dass** das technische Glasteil mit hohen Anforderungen an Konturtreue und Oberflächengüte, insbesondere die Präzisionslinse, beim Abkühlen mittels des Standfußes (44) aufgestellt wird.

21. Verfahren nach einem der vorhergehenden Ansprüche, **dadurch gekennzeichnet, dass** das Volumen des Rohlings (41) zwischen 110% und 130% des Volumens des technischen Glasteils mit hohen Anforderungen an Konturtreue und Oberflächengüte, insbesondere der Präzisionslinse, beträgt.

## Claims

1. Method for manufacturing a technical glass part, element or component meeting high requirements with respect to contour accuracy and surface quality, in particular a precision lens, wherein a blank (41) is produced by means of an injection press-moulding process to include a cast-on portion (42, 43, 44), wherein the blank (41) is cooled and subsequently heated, and wherein the blank (41) is subsequently blank-press-moulded to form a technical glass element meeting high requirements with respect to contour accuracy and surface quality, in particular a precision lens, wherein the blank (41) is held suspended by the cast-on portion (42, 43, 44) during the cooling process and/or the heating process or is mounted to stand up by means of a supporting foot (44) of the cast-on portion (42, 43, 44).

2. Method as claimed in claim 1, **characterized in that** the volume of the cast-on portion (42, 43, 44) is larger than the volume of the blank (41).

3. Method as claimed in claim 1 or 2, **characterized in that** the volume of the cast-on portion (42, 43, 44) amounts to more than twice the volume of the blank (41).

4. Method as claimed in any one of claims 1 to 3, **characterized in that** the cast-on portion (42, 43, 44) comprises a bulge (44).

5. Method as claimed in any one of claims 1 to 4, **characterized in that** the cast-on portion (42, 43, 44) is of at least two-piece design.

6. Method as claimed in any one of claims 1 to 5, **characterized in that** the cast-on portion (42, 43, 44) comprises at least one cylindrically formed part (42,43).

7. Method as claimed in claim 6, **characterized in that** the length of the cylindrically formed element (42, 43) amounts to at least twice the diameter of the cylindrically formed element (42, 43).

8. Method as claimed in any one of the preceding claims, **characterized in that** the blank (41) is cooled down while supplying heat.

9. Method as claimed in any one of the preceding claims, **characterized in that** the blank (41) is cooled down at a temperature of between 20K and 200K below the transformation temperature of the glass of the blank (41).

10. Method as claimed in any one of the preceding claims, **characterized in that** the blank (41) is cooled down and subsequently heated such that its thermal gradient is inverted.

11. Method as claimed in any one of the preceding claims, **characterized in that** the blank (41) is heated such that its surface assumes a temperature corresponding to the temperature at which the glass of the blank (41) has a viscosity log value of between 10⁵ Pas and 10⁸ Pas.

12. Method as claimed in any one of the preceding claims, **characterized in that** the blank (41) is not touched during the cooling process and/or the heating process.

13. Method as claimed in any one of the preceding claims, **characterized in that** the blank (41) is not touched at a surface provided as an optically effective surface during the cooling and/or heating process.

14. Method as claimed in any one of the preceding claims, **characterized in that** the blank (41) is not touched at a surface provided as an optically effective surface except during the pressing process.

15. Method as claimed in any one of the preceding claims, **characterized in that** the blank (41) is blank - press - moulded into the technical glass element meeting high requirements with respect to contour accuracy and surface quality, particularly into the precision lens, by means of a horizontal pressing aggregate (8).

16. Method as claimed in any one of the preceding claims, **characterized in that** the cast-on portion (42, 43, 44) is removed after the pressing of the technical glass element meeting high requirements with respect to contour accuracy and surface quality, in particular of the precision lens.

17. Method as claimed in any one of the preceding claims, **characterized in that** the technical glass part meeting high requirements with respect to contour accuracy and surface quality, in particular the precision lens, is cooled down after the pressing process while supplying heat.

18. Method as claimed in claim 17, **characterized in that** the cast-on portion (42, 43, 44) is removed after the cooling down of the technical glass part meeting high requirements with respect to contour accuracy and surface quality, in particular of the precision lens.

19. Method as claimed in claim 17 or 18, **characterized in that** the technical glass part meeting high requirements with respect to contour accuracy and surface quality, in particular the precision lens, is mounted suspended during the cooling process.

20. Method as claimed in claim 17 or 18, **characterized in that** the technical glass part meeting high requirements with respect to contour accuracy and surface quality, in particular the precision lens, is mounted to stand up by means of a supporting foot (44) during the cooling process.

21. Method as claimed in any one of the preceding claims, **characterized in that** the volume of the blank (41) amounts to between 110% and 130% of the volume of the technical glass part meeting high requirements with respect to contour accuracy and surface quality, in particular of the precision lens.

## Revendications

1. Procédé de fabrication d'un élément en verre technique avec des exigences élevées en termes de fidélité des contours et de qualité de surface, en particulier d'une optique de précision, dans lequel une ébauche (41) est fabriquée au moyen d'un procédé de moulage par injection avec un moule d'un seul tenant (42, 43, 44), l'ébauche (41) étant refroidie puis réchauffée, l'ébauche (41) étant ensuite soumise à un moulage de précision pour obtenir un élément en verre technique présentant des exigences élevées en termes de fidélité des contours et de qualité de surface, en particulier une optique de précision, l'ébauche (41) étant, pendant le refroidissement et/ou le réchauffement, maintenue suspendue au moule (42, 43, 44) ou posée au moyen d'un socle (44) du moule (42, 43, 44).

2. Procédé selon la revendication 1, **caractérisé en ce que** le volume du moule (42, 43, 44) est supérieur au volume de l'ébauche (41).

3. Procédé selon la revendication 1 ou 2, **caractérisé en ce que** le volume du moule (42, 43, 44) représente plus du double du volume de l'ébauche (41).

4. Procédé selon l'une des revendications 1 à 3, **caractérisé en ce que** le moule (42, 43, 44) comprend un épaississement (44).

5. Procédé selon l'une des revendications 1 à 4, **caractérisé en ce que** le moule (42, 43, 44) est au moins réalisé en deux parties.

6. Procédé selon l'une des revendications 1 à 5, **caractérisé en ce que** le moule (42, 43, 44) comprend au moins une pièce de forme cylindrique (42, 43).

7. Procédé selon la revendication 6, **caractérisé en ce que** la longueur de la pièce cylindrique (42, 43) représente au moins le double du diamètre de la pièce cylindrique (42, 43).

8. Procédé selon l'une des revendications précédentes, **caractérisé en ce que** l'ébauche (41) est refroidie en introduisant de la chaleur.

9. Procédé selon l'une des revendications précédentes, **caractérisé en ce que** l'ébauche (41) est refroidie à une température entre 20 K et 200 K en dessous de la température de transformation du verre de l'ébauche (41).

10. Procédé selon l'une des revendications précédentes, **caractérisé en ce que** l'ébauche (41) est refroidie puis réchauffée de telle sorte que son gradient de température s'inverse.

11. Procédé selon l'une des revendications précédentes, **caractérisé en ce que** l'ébauche (41) est réchauffée de telle sorte que sa surface présente une température correspondant à la température à laquelle le verre de l'ébauche (41) a une viscosité log entre 10⁵ Pas et 10⁸ Pas.

12. Procédé selon l'une des revendications précédentes, **caractérisé en ce que** l'ébauche (41) n'est pas touchée pendant le refroidissement et/ou le réchauffement.

13. Procédé selon l'une des revendications précédentes, **caractérisé en ce que** l'ébauche (41) n'est pas touchée, pendant le refroidissement et/ou le réchauffement, au niveau d'une surface prévue pour servir de surface effective optique.

14. Procédé selon l'une des revendications précédentes, **caractérisé en ce que** l'ébauche (41) n'est pas touchée en dehors du pressage au niveau d'une surface prévue pour servir de surface effective optique.

15. Procédé selon l'une des revendications précédentes, **caractérisé en ce que** l'ébauche (41) est soumise à un moulage de précision au moyen d'une presse horizontale (8) pour obtenir l'élément en verre technique présentant des exigences élevées en termes de fidélité des contours et de qualité de surface, en particulier l'optique de précision.

16. Procédé selon l'une des revendications précédentes, **caractérisé en ce que** le moule (42, 43, 44) est enlevé après le pressage de l'élément en verre technique présentant des exigences élevées en termes de fidélité des contours et de qualité de surface, en particulier de l'optique de précision.

17. Procédé selon l'une des revendications précédentes, **caractérisé en ce que** l'élément en verre technique présentant des exigences élevées en termes de fidélité des contours et de qualité de surface, en particulier l'optique de précision, est refroidi après le pressage en ajoutant de la chaleur.

18. Procédé selon la revendication 17, **caractérisé en ce que** le moule (42, 43, 44) est enlevé après le refroidissement de l'élément en verre technique présentant des exigences élevées en termes de fidélité des contours et de qualité de surface, en particulier de l'optique de précision.

19. Procédé selon la revendication 17 ou 18, **caractérisé en ce que** l'élément en verre technique présentant des exigences élevées en termes de fidélité des contours et de qualité de surface, en particulier l'optique de précision, est maintenu suspendu pendant le refroidissement.

20. Procédé selon la revendication 17 ou 18, **caractérisé en ce que** l'élément en verre technique présentant des exigences élevées en termes de fidélité des contours et de qualité de surface, en particulier l'optique de précision, est posé pendant le refroidissement au moyen du socle (44).

21. Procédé selon l'une des revendications précédentes, **caractérisé en ce que** le volume de l'ébauche (41) représente entre 110 % et 130 % du volume de l'élément en verre technique présentant des exigences élevées en termes de fidélité des contours et de qualité de surface, en particulier de l'optique de précision.
